# EUROPEAN PATENT APPLICATION

(11) **EP 4 501 758 A1**
(43) Date of publication of application: **05.02.2025**
(21) Application number: 24188119.2
(22) Date of filing: 11.07.2024
(51) Int. Cl.: B62D 25/20, B62D 33/02

(54) **CROSSPIECE FOR ASSEMBLING A LOADING PLATFORM FOR COMMERCIAL VEHICLES, ASSEMBLING KIT COMPRISING THE SAME AND LOADING PLATFORM FOR COMMERCIAL VEHICLES**

(30) Priority: 01.08.2023 IT 202300016260
(71) Applicant: Reco S.r.l., 23875 Osnago (LC) (IT)
(72) Inventor: REDAELLI, Guido, I-23875 Osnago (LC) (IT); GALLETTI, Davide Gianni Mario, I-23875 Osnago (LC) (IT); MANDELLI, Stefano, I-23875 Osnago (LC) (IT); MAFFI, Davide, I-23875 Osnago (LC) (IT)
(74) Representative: Mati, Silvia

(57) **Abstract**

The present invention concerns a crosspiece (35) for assembling a loading platform (10) comprising a crosspiece body with elongated development along a development direction (B), wherein the crosspiece body comprises a lower surface configured to be fixed to rest on a support frame (20) in turn configured to be fixed to a commercial vehicle chassis, and is characterized in that it comprises at least one notch defining a tab (35a) configured to be folded to protrude from the lower surface, the tab (35a) being positioned on the crosspiece body in such a way as to engage a spar (21) of the support frame (20) and define a predefined relative positioning between the crosspiece (35) and the spar (21).

## Description

### TECHNICAL FIELD

The present invention generally concerns a crosspiece for assembling a loading platform for commercial vehicles, a loading platform assembling kit with facilitated assembly, as well as a loading platform made starting from such a kit.

### STATE OF THE ART

In general terms, the loading platforms for commercial vehicles used for the transport of goods are set up by assembling different carpentry elements together, which together constitute an assembling kit, also known in the j argon of the sector simply as "assembly", and fixing the parts assembled to the vehicle chassis. In order for the platforms to be able to carry loads of considerable weight, the structural elements that compose them are generally characterized by both considerable structural strength and low weights so as not to excessively limit the payload capacity. Over time, therefore, the design of the platforms has mainly focused on a sturdy but lightweight construction, rather than investigating design choices aimed at assembling ease and versatility.

In addition, each platform tends to be customised terms of sizes and tailored to the type of load for which the vehicle is intended, bearing in mind, moreover, that the vehicles to be equipped are of different types and sizes. Over time, these factors have led to essentially artisanal design solutions.

In summary, the construction of a loading platform for commercial vehicles is normally carried out, at the state of the art, with artisanal and/or complex methods: the known platforms comprise parts made to measure based on the customer's requests, like for example the parts that make up the flat structure resting on the fake chassis, such as the longitudinal beam elements, also known in the sector as "longitudinal members", the crosspieces and so on.

Industrialised assembling solutions are also available on the market, but they allow little versatility for the creation of different versions, little flexibility on the sizes and finishes and, above all, they require long and laborious assembling methods.

In addition, in each of the known assembling solutions it is necessary to carry out very precise and complex measurements in order to guarantee a positioning of the individual elements exactly equidistant from the respective center lines and, in this way, an excellent balancing of the platform. In particular, the positioning of the crosspieces resting on the fake chassis today requires particularly long execution times in order to ensure an extremely precise and accurate execution thereof.

### OBJECTS AND SUMMARY OF THE INVENTION

In light of the above, the problem underlying the present invention is to devise a crosspiece for assembling a loading platform for commercial vehicles that allows it to be positioned on the fake chassis in a precise manner, quickly and in a simple manner, while retaining the characteristics of flexibility typical of an artisanal approach.

As part of this problem, an object of the present invention is to make a loading platform assembling kit for commercial vehicles that can be assembled precisely and accurately, albeit quickly and in a simple manner for the operator, guaranteeing the possibility of customisation to the customer's needs.

Another object of the present invention is to study a loading platform assembling kit for commercial vehicles that allows a particularly sturdy and at the same time lightweight loading platform to be made.

Still an object of the present invention is to design a loading platform that can be made in a versatile way, quickly and in a simple manner, albeit precise and accurate.

In accordance with a first aspect thereof, the invention therefore concerns a crosspiece for assembling a loading platform for commercial vehicles comprising a crosspiece body with an elongated development along a development direction, wherein the crosspiece body comprises a lower surface configured to be fixed to rest on a support frame in turn configured to be fixed to a commercial vehicle chassis.

According to the present invention the crosspiece body comprises at least one notch defining a tab configured to be folded to protrude from the lower surface, the tab being positioned on the crosspiece body in such a way as to engage a spar of the support frame and define a predefined relative positioning between the crosspiece and the spar.

The Applicant has identified that by making at least one tab in a predetermined position and such as to engage a spar of the support frame, it is possible to carry out in an extremely short time, compared to what happens today for assembling a loading platform, a pre-positioning of the crosspieces on the frame, which guarantees a precise positioning, for example centered, of the crosspieces on the frame.

It therefore becomes unnecessary to carry out the precise measurements that guarantee centering and which are the primary cause of the particularly long assembling times. In fact, the presence of foldable tabs that engage the spars can ensure that both are equidistant from the centerline plane of the crosspiece.

At the same time, in the pre-positioning configuration, the tabs keep the crosspiece in place during the operations of constraining the crosspiece to the spars, ensuring that the centering is preserved during their unwinding and therefore also downstream of them.

In accordance with a second aspect thereof, the invention concerns a loading platform assembling kit for commercial vehicles comprising:
- a pair of spars having development along a longitudinal direction and a pair of transverse beams configured to be connected to each other to form a support frame, the support frame being configured to be connected to a commercial vehicle chassis;
- a pair of longitudinal beam elements, a front beam element and a rear beam element configured to be connected to each other to form a perimeter structure of a flat structure configured to be connected above the support frame;
- at least one crosspiece with elongated development configured to be fixed to rest on the support frame according to an arrangement transverse to the longitudinal direction, contained in the perimeter structure and substantially coplanar with it; and
- at least one planar element configured to be housed inside the perimeter structure, resting on the at least one crosspiece to form a load bearing surface.

According to the present invention the at least one crosspiece is made as described above.

Advantageously, the loading platform assembling kit for commercial vehicles thus configured allows to achieve the same advantages described with reference to the crosspiece for assembling a loading platform according to the invention.

According to a third aspect thereof, the invention concerns a loading platform for commercial vehicles comprising a support frame configured to be connected to a commercial vehicle chassis and a flat structure defining a load bearing surface, configured to be connected above the support frame.

The support frame comprises at least one pair of spars having development along a longitudinal direction, each connected at a respective end to a transverse beam.

The flat structure comprises:
- at least a pair of longitudinal beam elements, a front beam element and a rear beam element shaped and arranged in such a way as to outline a perimeter structure,
- at least one crosspiece configured to be fixed to rest on the support frame according to an arrangement transverse to the longitudinal direction, contained in the perimeter structure and substantially coplanar with it; and
- at least one planar element configured to be housed inside the perimeter structure, resting on the at least one crosspiece to form the load bearing surface.

According to the present invention the at least one crosspiece is made as described above.

Advantageously, the loading platform for commercial vehicles thus configured allows to achieve the same advantages described with reference to the crosspiece for assembling a loading platform according to the invention and the relative assembling kit.

Further characteristics of the preferred embodiments of the crosspiece for assembling a loading platform for commercial vehicles, of the assembling kit as well as of the loading platform according to the present invention are the subject-matter of the dependent claims.

### BRIEF DESCRIPTION OF THE DRAWINGS

Further characteristics and advantages of the present invention will become clearer from the following detailed description of some preferred embodiments thereof, made with reference to the appended drawings.

The different features in the individual configurations can be combined with each other as desired according to the following description, if the advantages resulting specifically from a particular combination are to be availed of.

In such drawings:
- figure 1 is a perspective view of a first preferred embodiment of a loading platform for commercial vehicles according to the present invention;
- figure 2 is an exploded view of the loading platform of figure 1;
- figures 3, 3a and 3b are respectively a perspective view of a first and a second embodiment of a crosspiece of the loading platform of figure 1, as well as an enlarged detail of the crosspiece of figure 3;
- figure 4 is a perspective view of a detail showing the coupling between the crosspieces and the support frame;
- figure 5 is a perspective view of a longitudinal beam element of the flat structure of the loading platform of figure 1;
- figures 5a and 5b are enlarged details of figure 5;
- figure 5c is a partial perspective view of the end part of the longitudinal element of figure 5;
- figures 6a to 6c are respectively a top, side and bottom view of an end portion of the longitudinal beam of figure 5;
- figure 7 is a top view of a central portion of the longitudinal beam of figure 5;
- figure 8 is a perspective view of a detail showing the coupling between the crosspieces and the flat structure;
- figure 9 is an exploded view of a loading platform according to a second embodiment of the present invention;
- figures 10 and 10a are respectively a perspective view of a transverse post of the rest frameworks of the platform of figure 9 and an enlarged detail thereof;
- figure 11 is a perspective view of the loading platform of figure 9 with a long load housed on the platform depicted; and
- figures 12 and 12a are respectively a side elevation view of the platform of figure 11 and an enlarged detail thereof.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "comprises" and "includes" means "comprises or includes, but not limited to", unless otherwise indicated.

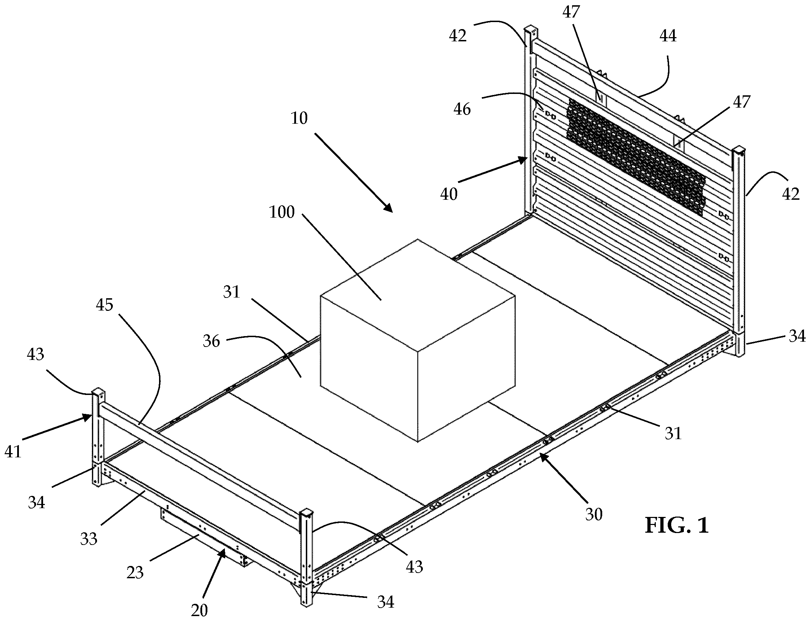

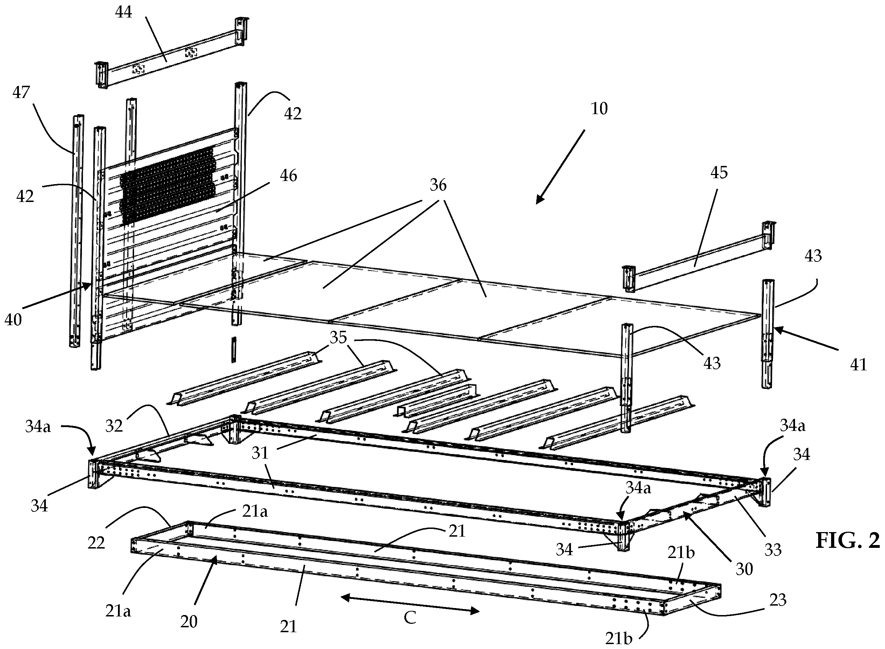

With reference to figures 1 and 2, a first preferred embodiment of a loading platform assembling kit for commercial vehicles according to the present invention is illustrated, wherein the loading platform is indicated overall with 10.

The loading platform 10 which can be made through the assembling kit comprises a support frame 20 (shown in figure 2), also called a fake chassis, configured to be connected to a commercial vehicle chassis (not illustrated) and a flat structure 30 defining a surface bearing a load to be transported, configured to be arranged above the support frame 20 and fixed thereto.

In the embodiment illustrated in figures 1 and 2, the flat rest structure 30 is delimited at a front side thereof by a front rest framework 40, and at a rear side thereof by a rear rest framework 41. Both frameworks 40,41 extend vertically from the flat structure over a height that, in the illustrated embodiment, is greater for the front framework. However, cases in which the heights of the two frameworks coincide or the rear framework is higher than the front one cannot be excluded. It is also not possible to exclude embodiments (not illustrated) in which the flat structure 30 is delimited by a single framework, front or rear.

The support frame 20 is made starting from at least two spars 21 configured to be connected to the commercial vehicle chassis, which extend substantially linearly along a longitudinal direction C, between a front end 21a and a rear end 21b thereof. The spars 21 are preferably made as profiled elements of the structural type, i.e. shaped and configured to support the weight of the load to be transported. In particular, the spars 21 preferably have a substantially constant cross section shaped as "C" or "H".

The support frame 20 is also made starting from at least two transverse beams 22,23, of which a front transverse beam 22 placed at the front ends 21a of the spars 21 and a rear transverse beam 23 placed at the rear ends 21b of the spars 21, and fixed thereto 21 to form a perimeter structure defining the support frame 20.

The flat rest structure 30 is made starting from a set of at least four beam elements 31,32,33 shaped and arranged in such a way as to outline a perimeter structure of the flat structure 30. In particular, the four beam elements 31,32,33 define a quadrilateral perimeter structure, in rectangular detail. To this end, the set of the four beam elements comprises two longitudinal beam elements 31, also known in the j argon of the sector with the name "longitudinal members" 31, placed at opposite ends of a front beam element 32 and a rear beam element 33, and transversely thereto 32,33. Angular junction elements 34 are also provided which join the beam elements 31,32,33 in pairs according to a mutually transverse arrangement, preferably substantially orthogonal.

In the embodiment shown in figure 1, the front beam element 32 of the set of beam elements is configured to be placed above a corresponding front transverse beam 22 of the support frame 20. Similarly, the rear beam element 33 of the set of beam elements is configured to be placed above a corresponding rear transverse beam 23 of the support frame 20.

Between the front beam element 32 and the rear beam element 33 of the flat structure 30 and parallel thereto there is arranged at least one crosspiece 35, preferably a plurality of crosspieces 35, fixable above the support frame 20 at intermediate positions between the front transverse beam 22 and the rear transverse beam 23 of the support frame 20.

At the same time, the at least one crosspiece 35 can be of the type fixable to the longitudinal beam elements 31 of the flat structure 30 according to a substantially coplanar arrangement thereto 31.

Within the perimeter structure of the flat structure 30 it is provided that at least one planar element 36 is arranged according to an arrangement coplanar with the perimeter structure defined by the beam elements 31,32,33. The at least one planar element 36 defines the surface bearing the load 100 to be transported. In particular, the at least one planar element 36 is configured to be fixed above one or more crosspieces 35 constrained to the support frame 20 and to the longitudinal beam elements 31.

Each of the front framework 40 and the rear framework 41 is made starting from at least one pair of vertical posts 42,43 between which a respective front 44 or rear 45 transverse post extends. In the illustrated embodiments, a pair of vertical posts 42,43 is provided for each framework 40,41.

Within the scope of the present invention and in the appended claims, with "vertical post" it is intended to also include posts having an extension that is at least partially, but mainly vertical, like for example a post that rises from the flat structure according to a course not strictly orthogonal to it.

In a preferred, but not exclusive embodiment, the vertical posts 42,43 are connected to the angular elements 34. In this preferred embodiment, the angular elements 34 of the perimeter structure preferably comprise a seat 34a with vertical development shaped to accommodate a vertical post of the frameworks 40,41. Two front vertical posts 42 arranged inside the vertical seats 34a of the angular pieces placed at the ends of the front beam 32 define the vertical sides of the front framework 40. Similarly, two rear vertical posts 43 arranged inside the vertical seats 34a of the angular pieces placed at the ends of the rear beam 33 define the vertical sides of the rear framework 41.

In the embodiment illustrated in figures 1 and 2, a bulkhead 46, preferably reinforced by a pair of reinforcing posts 47, is fixable to the two front vertical posts 42 which has the function of protecting a cabin of the commercial vehicle from any involuntary movements of the load to be transported.

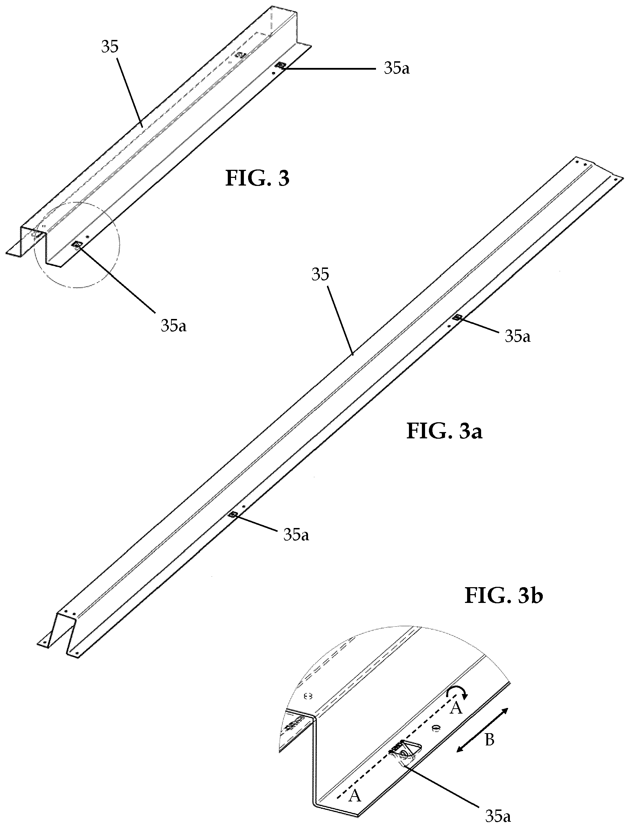

As shown in figures 3, 3a and 3b, the crosspieces 35 comprise a crosspiece body that develops along a development direction B and is provided with at least one notch defining a tab or clip 35a. The tab 35a is configured to be easily folded in place, in such a way as to engage a spar 21 of the fake chassis externally and/or internally to the support frame 20, or possibly to engage a corresponding seat (not shown) arranged on the spar 21 to receive said tab or clip 35a. In this case, the spars 21 may comprise a plurality of seats for said tab 35a, arranged along the extension thereof 21 in order to allow the correct positioning of the crosspieces 35 in a plurality of predefined positions. Similarly, the crosspieces 35 may comprise one or more pairs of notches each defining a tab or clip 35a. In particular, the resulting pairs of tabs 35a will preferably be placed equidistant from a centerline plane of the crosspiece 35, on the same side with respect to that plane, i.e. along a same orthogonal direction departing from the plane, or astride the same, i.e. along orthogonal directions departing from the plane.

In the embodiment illustrated in figure 3b, the notches are made so as to define tabs 35a that are rotatable, for example foldable by deformation, according to a rotation axis A parallel to the development direction B of the crosspiece body 35. In this way it is ensured that the tabs 35a, once rotated, provide an exact measurement of distance from the centerline plane of the crosspiece 35.

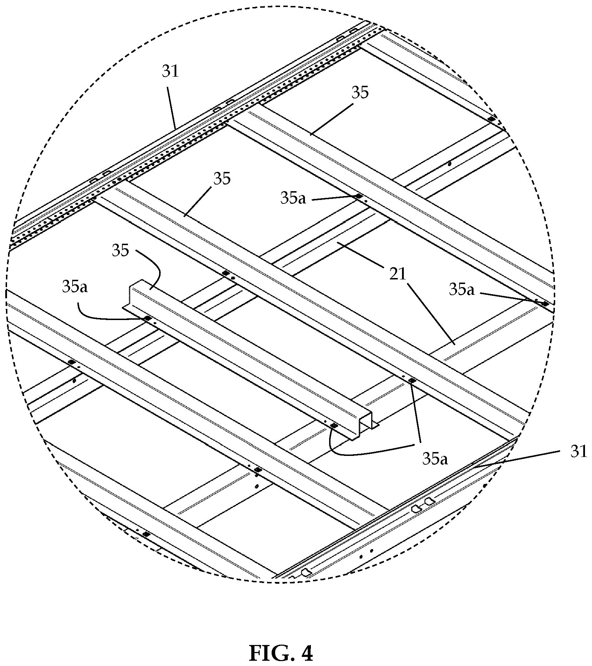

Once the pair of folded tabs 35a has engaged the spars 21, as shown in figure 4, it is in fact guaranteed that the spars 21 are both in an equidistant position with respect to the centerline plane of the crosspiece 35. Furthermore, in such a configuration, the crosspiece 35 can be easily constrained to both spars 21, for example by riveting and/or bolting.

In the case of a series of pairs of tabs 35a, the crosspiece 35 is advantageously able to define a precise relative positioning, with respect to the spars of a series of support frames 20 of different sizes. In particular, the pairs of tabs 35a may have different widths and/or pitches to intercept different widths of support frames 20 that are generally characteristic in order to correctly abut the specific chassis of the commercial vehicle manufacturer.

In particular, the preventive positioning in an obligatory relative position with respect to the two spars 21 and maintained by the folded tabs 35a, greatly facilitates the work of the fitter. As part of the connection of each crosspiece to the spars 21, it is in fact no longer necessary to carry out laborious measurements to guarantee a precise positioning, for example perfectly centered, with respect to the spars 21. In addition, the folded tabs 35a facilitate the constraint operations, preserving the preventive positioning during their unwinding

In the variant of figure 3a, the crosspieces 35 are configured to be additionally fixed to the longitudinal beam elements 31 of the flat structure 30. To this end, the crosspiece body has an extension substantially comparable to the front 32 and rear 33 beam elements. Furthermore, the ends 35b of the crosspieces 35 preferably define a surface inclined not orthogonally with respect to the development direction B, for example a surface inclined so as to define a lower surface of the crosspiece body having an upper extension of an extension of an upper surface of the crosspiece body with reference to the development direction B. In such a case, the extension of the lower surface is substantially comparable with the extension of the front 32 and rear 33 beam elements in the respective development direction.

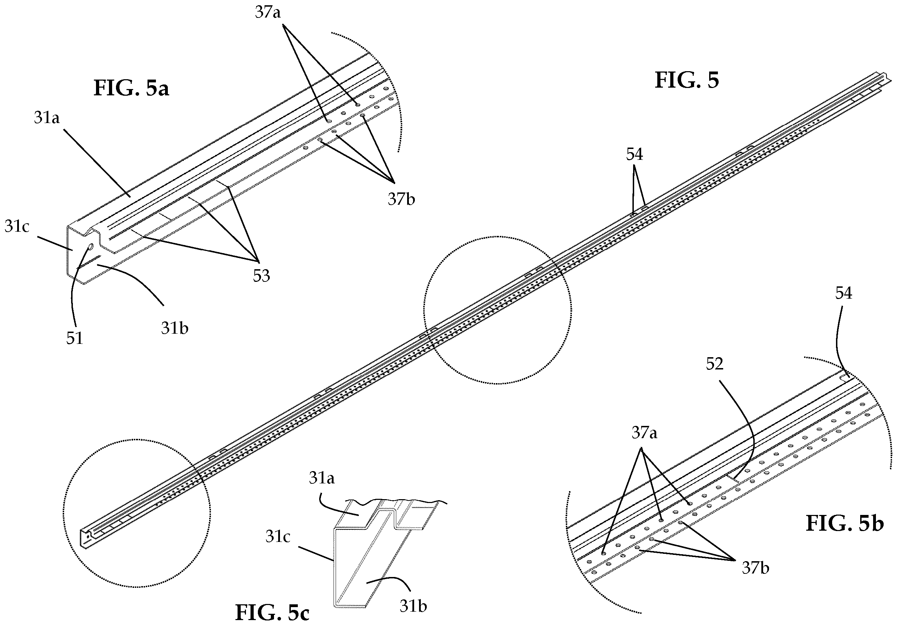

For fixing the crosspieces to the longitudinal beam elements 31, these longitudinal beam elements 31 have in the embodiment of figures 5-7 a longitudinally elongated body having along its development at least one substantially "C"-shaped section (shown in particular in figure 5c) so as to define an upper limb 31a, a lower limb 31b and a portion 31c joining between the upper limb 31a and the lower limb 31b, which in the illustrated embodiment is substantially orthogonal to both limbs 31a, 31b.

Within the scope of the present description and in the appended claims with "substantially C-shaped section" it is intended to indicate a body having a section comprising at least one C-shaped portion, for example a section provided with a C-shaped portion and at least one second portion shaped in any way, such as mirrored C-shaped, L-shaped or according to other shapes.

In an alternative embodiment not illustrated, the longitudinal beam elements 31 have a box-like shape, open on one side to form a substantially "C"-shaped section at least at one intersection zone with a crosspiece 35.

In particular, the upper limb 31a has a greater extension in transverse section than the lower limb 31b in a horizontal direction. Within the scope of the present description and in the appended claims, with "extension in transverse section" it is intended to indicate the extension in a plane orthogonal to a longitudinal development direction, in the present case to the longitudinal development direction of the longitudinal beam elements 31.

The body of the longitudinal elements 31 comprises a first series of holes 37a at constant pitch obtained on the upper limb 31a and a second series of holes 37b also at constant pitch, obtained on the lower limb 31b. Preferably, the pitch of the first holes 37a is the same as the second holes 37b. The pitch of the holes is for example measured from center to center of the holes.

As shown in figures 5-7, the longitudinal beam elements 31 have a symmetrical shape with respect to a center line thereof. In this way, advantageously, a longitudinal element 31 can be indifferently used to constitute a right or left side of the perimeter structure of the flat structure 30. The initial positioning direction of the longitudinal beam element 31 is also made indifferent.

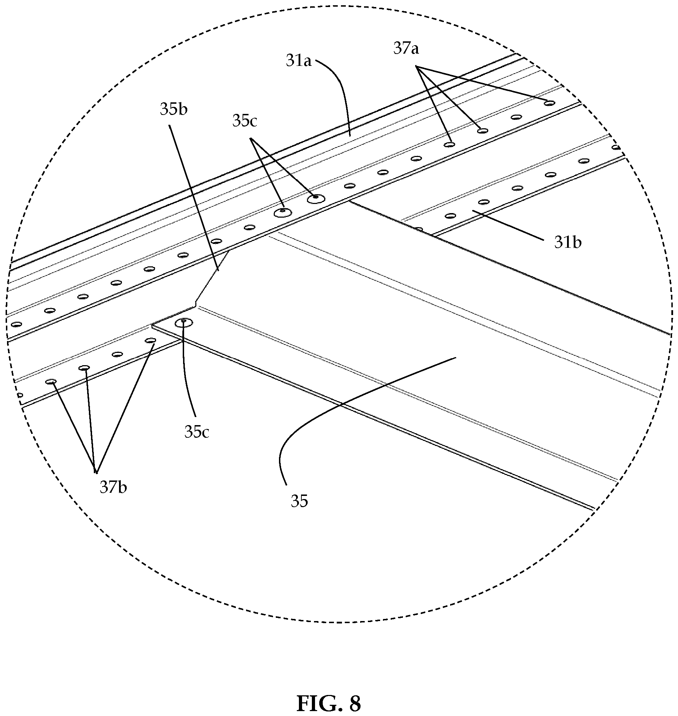

In detail, the first and second series of holes 37a ,37b are arranged symmetrically with respect to the center line of the body of the longitudinal elements 31. In this way, as shown in figure 8, the positioning and consequent fixing of the crosspieces 35 to the longitudinal beam elements 31 is made particularly easy. To this end, the crosspiece 35 advantageously comprises at least one pair of holes 35c (illustrated in detail in figure 8) spaced apart from one another by a multiple of the constant pitch of the first and/or second holes 37a,37b.

Furthermore, it becomes unnecessary to carry out preventive precision measurements in order to ensure that a crosspiece 35 is constrained to both longitudinal beam elements 31 in a position equidistant with respect to the center line thereof 31.

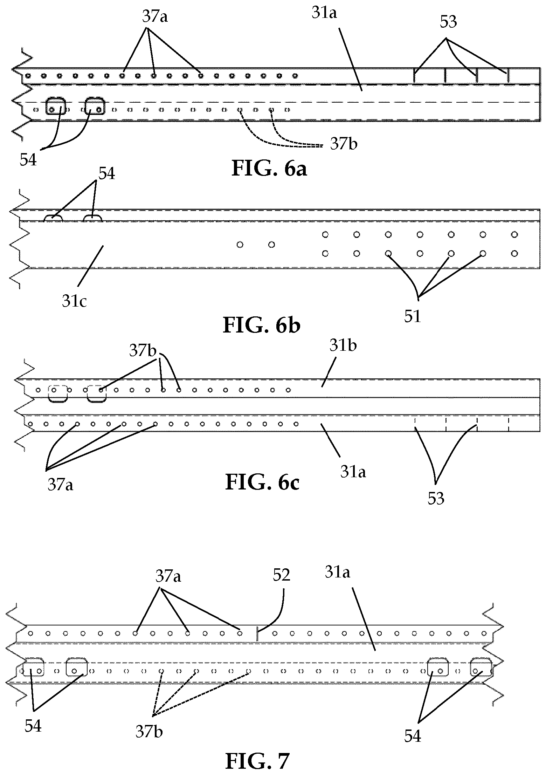

The center line of the longitudinal elements 31 is identified by a notch 52 made on the upper limb 31a, shown in detail in figures 5b and 7, configured to accommodate a rigid fold, also known as an "edge", of a common roll-up measuring tape or flexometer. In this way, it is extremely easy and convenient to carry out the necessary measurements for cutting of the longitudinal beam elements 31, as well as for positioning of the crosspieces with respect to the development of the longitudinal beam element 31.

The mounting of the support frame 20 and of the flat structure 30, as well as the fixing of the crosspieces 35 to the spars 21 and to the longitudinal beam elements 31 thus become particularly simple and quick to carry out, leading to savings in the overall assembly time of up to 75%.

The longitudinal beam elements 31 advantageously have a plurality of engravings 53 configured and positioned to facilitate an identification of a correct position of cutting to measure of said longitudinal elements 31. In particular, the engravings 53 of the plurality of engravings are placed at predetermined distances and pitches.

In addition, the longitudinal beam elements 31 have on the respective joining portions 31c a third series of holes 51 intended for fixing the angular elements 34, placed at predetermined distances and pitches. In detail, the third holes 51 of the third series of holes are arranged at substantially the same distances and pitches as the engravings 53. In this way, the third holes 51 allow the angular elements 34 to be fixed to the longitudinal beam element 31 regardless of the length to which it can be cut.

Still, the longitudinal beam elements 31 have preferably lozenge-shaped slots 54 for the insertion of hooks or hangers of load tensioning belts.

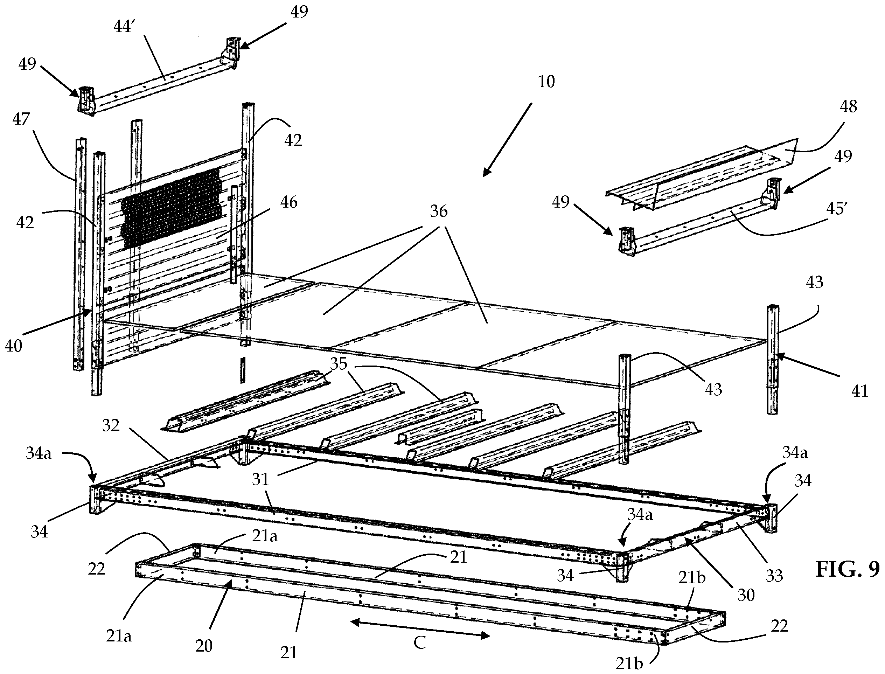

With reference to figures 9-12, a second preferred embodiment of a loading platform 10 for commercial vehicles according to the present invention is illustrated.

The loading platform 10 of figure 9 differs from the first embodiment of figure 2 in that the transverse posts 44',45' of the front 40 and rear 41 rest frameworks are rotatably constrained to the respective pair of vertical posts 42,43, so as to be able to rotate about a rotation axis A' parallel to the respective post development 44',45'.

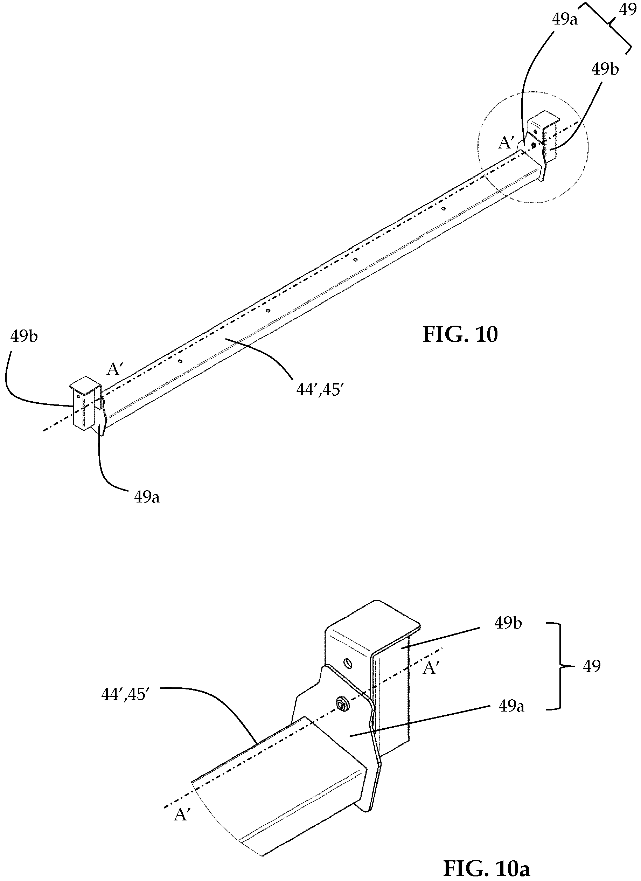

In particular, in the embodiment of figure 9, each transverse post 44',45' is connected to the respective vertical posts 42,43 through a tilting interface 49 shown in detail in figures 10 and 10a and configured to make a cradle connection, i.e. with the transverse post 44',45' positioned below the rotation axis A'.

In an alternative form (not depicted) the transverse post 44',45' is positioned above the rotation axis A'.

In the specific case, the tilting interface 49 comprises a plate of connection 49a to the transverse post 44',45' hinged at a coupling element 49b to the vertical post 42,43 which defines a seat in which an end of a vertical post 42,43 can be inserted.

In this case, a load 100 resting on both the transverse posts 44',45' weighs below the respective rotation axes A' and automatically creates an appropriate inclination of the transverse posts 44',45' such as to reach a stable load bearing condition 100 in which a rest surface of the transverse posts 44',45' is substantially inclined parallel to a corresponding load bearing surface 100.

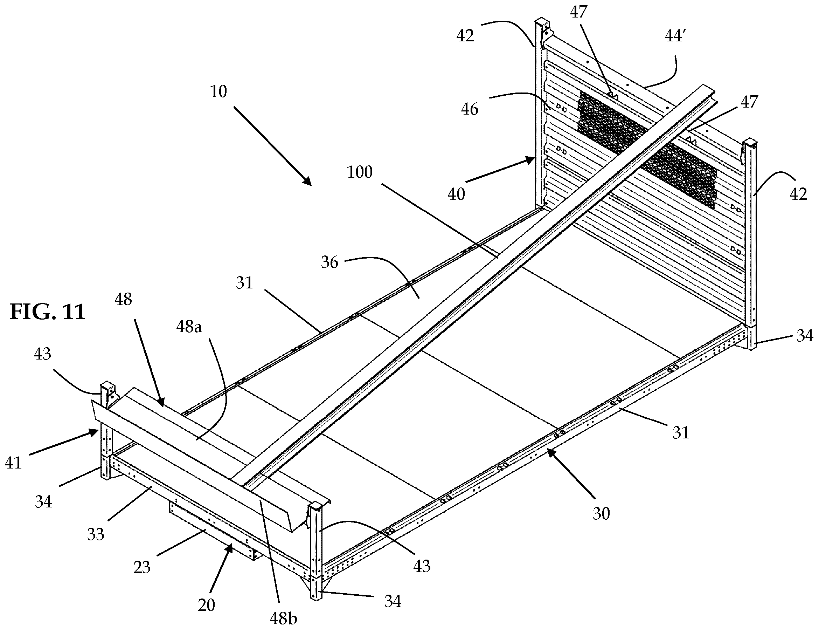

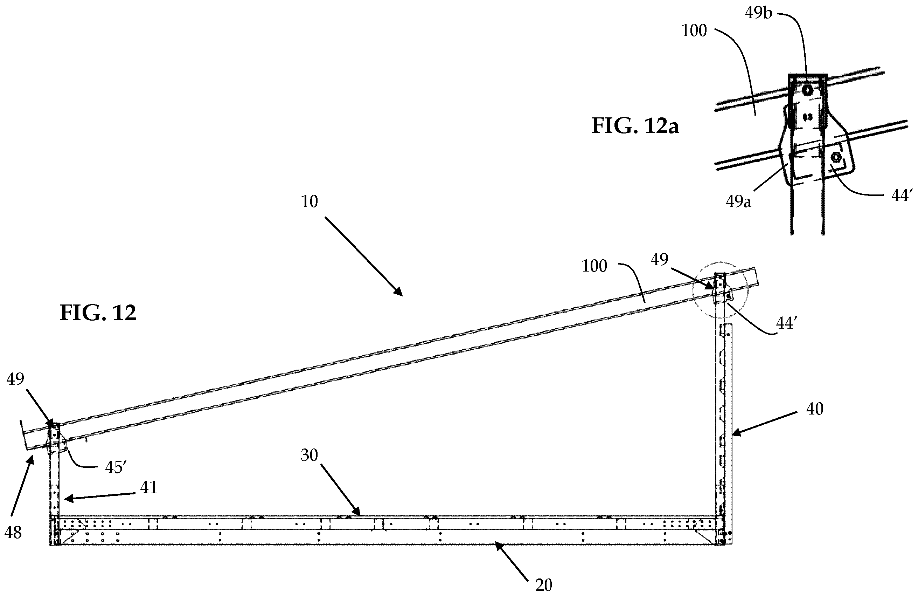

In the case of loads with substantially longitudinal development, such as the one shown in figures 11 and 12, the rest surface of the transverse posts 44',45' is substantially inclined parallel to the development of the load 100 in the rest condition.

Obviously, for long loads with a curved course, or that develop lengthwise following a broken trajectory, the front and rear transverse posts 44',45' will assume inclinations different from one another, following the shape and inclination of the load 100.

There is also a stop element 48 constrained to the transverse post placed at a lower level, that is, usually than the rear transverse post 45'. The stop element 48 comprises a rest surface 48a and an end-of-travel surface 48b, usually transverse, preferably orthogonal, to the rest surface 48a.

In this way, as shown in figures 11 and 12, a load 100 resting on both transverse posts 44',45' and inclined towards the transverse post 45' placed at a lower level, engages the stop element 48 constrained to said transverse post 45' and is restrained from sliding downwards, coming into abutment against the end-of-travel surface 48b.

In a preferred variant of the invention, the tilting interface 49 comprises suitable locking means (not illustrated) of the relative position between the connection plate 49a and the coupling element 49b to the vertical post 42,43. In this way, once the stable load bearing condition 100 has been reached in which the transverse posts 44',45' are suitably inclined, it is possible to lock the connection plate 49a and the coupling element 49b in place in order to maintain the inclination resulting in a stable support.

## Claims

1. Crosspiece (35) for assembling a loading platform (10) comprising a crosspiece body with elongated development along a development direction (B), wherein the crosspiece body comprises a lower surface configured to be fixed to rest on a support frame (20) in turn configured to be fixed to a commercial vehicle chassis,
**characterized in that** it comprises at least one notch defining a tab (35a) configured to be folded to protrude from the lower surface, the tab (35a) being positioned on the crosspiece body in such a way as to engage a spar (21) of the support frame (20) and define a predefined relative positioning between the crosspiece (35) and the spar (21).

2. Crosspiece (35) according to claim 1, wherein the tab (35a) is rotatable according to a rotation axis (A) parallel to the development direction (B) of the crosspiece body.

3. Crosspiece (35) according to claim 1 or 2, comprising at least one pair of notches each defining a tab (35a) configured to be folded to protrude from the lower surface, wherein the tabs (35a) are positioned on the crosspiece body in such a way as to engage a pair of spars (21) of the support frame and define a predefined relative positioning between the crosspiece (35) and the pair of spars (21).

4. Crosspiece (35) according to claim 3, wherein the tabs (35a) are positioned on the at least one crosspiece (35) in such a way as to engage the pair of spars (21) of the support frame (20) in a relative position in which the spars (21) of the pair of spars (21) are in an equidistant position with respect to a centerline plane of the crosspiece (35); and/or
wherein each tab of the at least one pair of tabs (35a) is placed equidistant from a centerline plane of the crosspiece body, in opposite orthogonal directions departing from the centerline plane and/or in a same orthogonal departing direction.

5. Crosspiece (35) according to any one of the preceding claims, wherein the crosspiece body develops between a first and a second end (35b) and is configured to be fixed at each of its ends (35b) to a longitudinal beam element (31) of a pair of longitudinal beam elements (31) of a flat structure (30) defining a load bearing surface (100) and configured to be connected above the support frame (20), wherein the crosspiece body is configured to be fixed according to an arrangement substantially coplanar to said longitudinal beam elements (31).

6. Crosspiece (35) according to claim 5, wherein the first and second ends (35b) define a surface inclined not orthogonally with respect to the development direction (B).

7. Crosspiece (35) according to claim 5 or 6, wherein the crosspiece body comprises an upper surface, wherein the lower surface has an extension greater than an extension of the upper surface of the crosspiece body with reference to the development direction (B).

8. Loading platform assembling kit (10) for commercial vehicles comprising:
- a pair of spars (21) having development along a longitudinal direction (C) and a pair of transverse beams (22,23) configured to be connected to each other to form a support frame (20), the support frame (20) being configured to be connected to a commercial vehicle chassis;
- a pair of longitudinal beam elements (31), a front beam element (32) and a rear beam element (33) configured to be connected to each other to form a perimeter structure of a flat structure (30) configured to be connected above the support frame (20);
- at least one crosspiece (35) with elongated development configured to be fixed to rest on the support frame (20) according to an arrangement transverse to the longitudinal direction (C), contained in the perimeter structure and substantially coplanar with it; and
- at least one planar element (36) configured to be housed inside the perimeter structure, resting on the at least one crosspiece (35) to form a load bearing surface (100); **characterized in that** the at least one crosspiece (35) is made according to any one of the preceding claims.

9. Loading platform assembling kit (10) according to claim 8, wherein the tabs (35a) of the at least one crosspiece (35) are positioned on the same (35) in positions such as to engage an external wall and/or an internal wall of the pair of spars (21) of the support frame (20) and/or a seat provided on the pair of spars (21) to accommodate a tab (35a).

10. Loading platform assembling kit (10) according to claim 8 or 9, wherein the longitudinal beam elements (31) comprise a longitudinally elongated body having a substantially "C"-shaped section in such a way as to define an upper limb (31a), a lower limb (31b) and a portion (31c) joining between the upper limb (31a) and the lower limb (31b), wherein the body of the longitudinal elements (31) comprises a first series of holes (37a) obtained on the upper limb (31a) at substantially constant pitch and a second series of holes (37b) obtained on the lower limb (31b) at substantially constant pitch.

11. Loading platform assembling kit (10) according to claim 10, wherein the upper limb (31a) of the body of the longitudinal beam elements (31) has, in a transverse section and in a horizontal direction, an extension greater than an extension of the lower limb (31b) of the body of the longitudinal beam elements (31); and wherein the lower surface of the crosspiece body extends into overlap with the lower limb (31b) and the upper surface of the crosspiece body extends into overlap with the upper limb (31a).

12. Loading platform assembling kit (10) according to claim 10 or 11, wherein the first series of holes (37a) and the second series of holes (37b) are arranged symmetrically with respect to a line of symmetry of the body of the longitudinal beam elements (31) and preferably have the same constant pitch.

13. Loading platform (10) for commercial vehicles comprising:
a support frame (20) configured to be connected to a commercial vehicle chassis and a flat structure (30) defining a load bearing surface (100), configured to be connected above the support frame (20),
the support frame (20) comprising at least one pair of spars (21) having development along a longitudinal direction (C), each connected at a respective end to a transverse beam (22,23);
the flat structure (30) comprising:
- at least a pair of longitudinal beam elements (31), a front beam element (32) and a rear beam element (33) shaped and arranged in such a way as to outline a perimeter structure,
- at least one crosspiece (35) configured to be fixed to rest on the support frame (20) according to an arrangement transverse to the longitudinal direction (C), contained in the perimeter structure and substantially coplanar therewith; and
- at least one planar element (36) configured to be housed inside the perimeter structure, resting on the at least one crosspiece (35) to form the load bearing surface (100);
**characterized in that** the at least one crosspiece (35) is made according to any one of claims 1 to 7.

14. Loading platform (10) according to claim 13, wherein the tabs (35a) of the at least one crosspiece (35) engage an external wall and/or an internal wall of the pair of spars (21) of the support frame (20) and/or a seat provided on the pair of spars (21) to accommodate a tab (35a).

15. Loading platform (10) according to claim 13 or 14,
wherein the longitudinal beam elements (31) comprise a longitudinally elongated body having a substantially "C"-shaped section so as to define an upper limb (31a), a lower limb (31b) and a portion (31c) joining between the upper limb (31a) and the lower limb (31b), and
wherein preferably the upper limb (31a) of the body of the longitudinal beam elements (31) has, in a transverse section and in a horizontal direction, an extension greater than an extension of the lower limb (31b) of the body of the longitudinal beam elements (31); wherein the lower surface of the crosspiece body extends into overlap with the lower limb (31b) and the upper surface of the crosspiece body extends into overlap with the upper limb (31a).
